# EUROPEAN PATENT APPLICATION

(11) **EP 1 107 081 A2**
(43) Date of publication of application: **13.06.2001**
(21) Application number: 00124084.5
(22) Date of filing: 06.11.2000
(51) Int. Cl.: G05B 19/4097

(54) **Program creating device**

(30) Priority: 11.11.1999 JP 32055599
(71) Applicant: Murata Kikai Kabushiki Kaisha, Minami-ku, Kyoto-shi, Kyoto 601 (JP)
(72) Inventor: Tamamura, Hitoshi, Kani-gun, Gifu (JP)
(74) Representative: Liedl, Christine, Dipl.-Chem.

(57) **Abstract**

It is an object of the present invention to efficiently and appropriately create a conveyance program for a loader when, for example, a loader is added to an existing processing machine. It is another object of the present invention to take advantage of stored know-how of a processing machine user. The present invention is applied to creation of a program for controlling a processing system comprising a processing machine 1 and a loader 2 for conveying a work W, M to the processing machine. A program creating means 6 is provided for creating a conveyance program 14 based on an existing processing program 13A. This means 6 has a product shape data creating section 18 for creating product shape data 15 from the processing program 13A. It also has a conveyance program generating section 19 for generating a conveyance program 14 from the created product shape data 15. It further has a processing program modifying section 20 for modifying the existing processing program 13A taking operations of the loader 2 into consideration (Fig. 1).

## Description

### Field of the Invention

The present invention relates to a program creating device that is used when a loader is added to an existing processing machine such as a punch press or a lathe.

### Background of the Invention

A work processing machine such as a punch press may conventionally be used without a loader. The work processing machine is controlled by an NC device based on a processing program, but an operator manually loads material works and unloads product works. A loader may be added to such an existing processing machine.

Automatically operating the loader requires a conveyance program for controlling the loader. Creating the conveyance program requires data such as a product shape obtained by the processing machine and a product arrangement relative to the material. For example, to use the loader to pick up a product from the processing machine, accurate product shape and position are required to determine where the loader is to be stopped or where suction pads of the loader are to be placed to suck a product while avoiding contacting with punch holes in the product.

A user of the work processing machine often has only a processing program and no drawing of a product shape at hand.

Even with a drawing, it is inefficient and difficult to create a loader conveyance program from this drawing from the beginning. That is, even if the same product is processed by the same work processing machine, a processing procedure or form varies depending on the user's know-how and such a difference makes operations of the loader inappropriate. The user's know-how is stored in the processing program for the work processing machine. Such processing know-how of the user, however, is ineffective if the conveyance program is created from the beginning based on the product drawing. Thus, to create the conveyance program taking the processing know-how into consideration, the user must make analysis to create it from the beginning. This requires a large amount of time and labor.

### Summary of the Invention

It is an object of the present invention to provide a program creating device that can efficiently and appropriately create a loader conveyance program and effectively use stored know-how of a processing machine user when the loader is added to an existing processing machine.

It is another object of the present invention to allow efficient creation of a conveyance program that carries out conveyance appropriate for a product shape.

It is yet another object of the present invention to enable creation of a processing program and a conveyance program that can carry out appropriate processing and conveyance, respectively, including the use of stored know-how as well as considerations for loader conditions.

### Brief Description of the Drawings

Figure 1 is a block diagram showing a conceptual configuration of one embodiment of the present invention.

Figure 2 is an explanatory drawing showing a processing machine, a loader, and a controlling device.

Figure 3 is a top view of a processing system having the processing machine and the loader installed therein.

Figure 4 is a top view of the processing system.

Figure 5 is an explanatory drawing showing the relationship between a tool arrangement and a product shape.

Figure 6 is an explanatory drawing showing how products are accumulated.

Figure 7 is a top view showing the relationship between loader work gripping means and a work.

### Detailed Description of the Preferred Embodiments

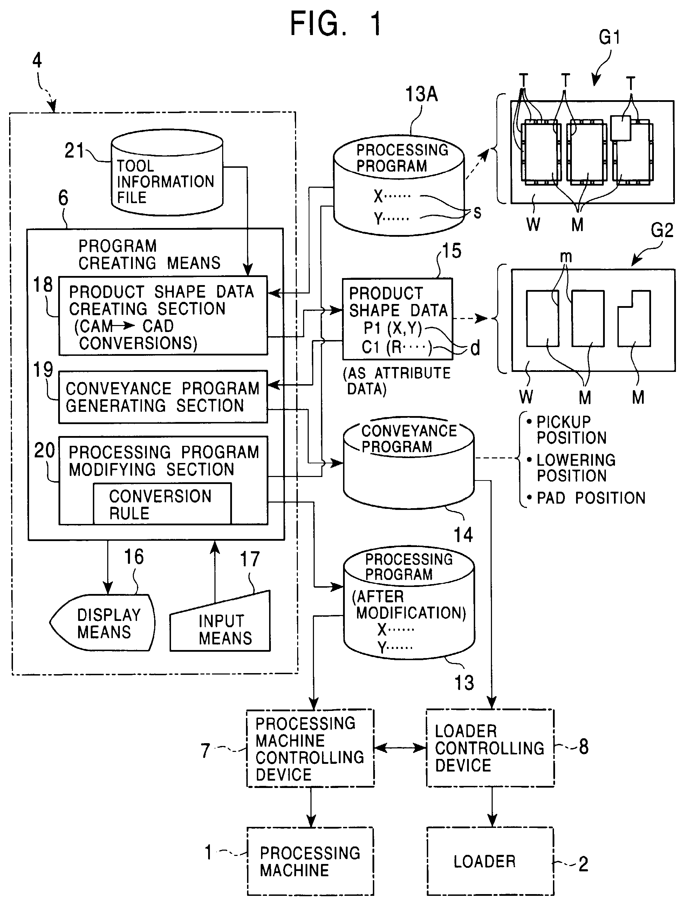

The configuration of the present invention will be described in conjunction with Figure 1, corresponding to an embodiment.

This is a program creating device 4 applied to a processing system comprising a processing machine 1 operating in accordance with a processing program 13 and a loader 2 for conveying a work W, M to the processing machine 1 in accordance with a conveyance program 14, the device having program creating means 6 for creating a conveyance program 14 based on a processing program 13A.

With this configuration, since the conveyance program 14 is created on the basis of the processing program 13A, the conveyance program 14 for the loader 2 can be efficiently and appropriately created when the loader 2 is added to the existing processing machine 1. In addition, compared to recreation of a processing and loader programs from drawings, the original processing program 13A can be utilized to take advantage of know-how of a processing machine user stored in the processing program 13A.

The program creating means 6 has a product shape data creating section 18 for creating product shape data 15 from the processing program 13A and a conveyance program generating section 19 for generating a conveyance program 14 from the created product shape data 15.

The processing program 13A is composed of a group of commands for operations of a tool and the work and generally has no shape data on the product M processed using the processing program 13A. It is difficult to directly create the conveyance program 14 for the loader 2 which is suitable for the product M, based on the commands for the operations of the tool and work. The product shape data 15 can be easily created from the processing program 13A if the movement of the tool, the shape of the tool, the movement of the work and the shape of the work are known. The conveyance program 4 suitable for the product M can be easily created by using the product shape data creating section 18 to create the product shape data 15 from the processing program 13A and generating the conveyance program 14 from this product shape data 15. When the conveyance program generating section 19 generates the conveyance program 14, commands or data in the processing programs 13, 13A can be used in addition to the product shape data 15 to create a conveyance program that can carry out conveyance more suitable for the product.

According to the present invention, the program creating means 6 may have a processing program modifying section 20 for modifying the processing program 13A in accordance with a predetermined conversion rule that takes operations of the loader 2 into consideration.

An efficient processing procedure may vary depending on whether the processing machine 1 is used solely or in combination with the loader 2, and this may also slightly vary a finished shape obtained by the processing machine 1 if the processing machine 1 is a work processing machine for a sheet or the like. Thus, efficient processing can be executed by specifying predetermined conversion rules in the program creating means 6 to modify the original processing program 13A to the processing program 13 that takes operations of the loader 2 into consideration. In addition, since the processing program 13 is not recreated from the beginning but is obtained by modifying the existing processing program 13A, the new processing program 13 includes know-how stored in the existing processing program 13A. In this manner, the processing program 13 and conveyance program 14 can be created which can carry out appropriate processing and conveyance, respectively, including the use of the stored know-how as well as considerations for loader conditions.

One embodiment of the present invention will be described in conjunction with Figures 1 to 7. As shown in Figure 1, this program creating device 4 is applied to a processing system comprising the processing machine 1 and the loader 2 for conveying the work W, M to the processing machine 1, and has program creating means 6 for creating the conveyance program 14 based on the existing processing program 13A. The processing machine 1 is controlled by a program-controlled processing machine controlling device 7 such as an NC device in accordance with the processing program 13, and comprises a processing machine for a sheet. The loader 2 is controlled by a program-controlled loader controlling device 8 in accordance with the conveyance program 14.

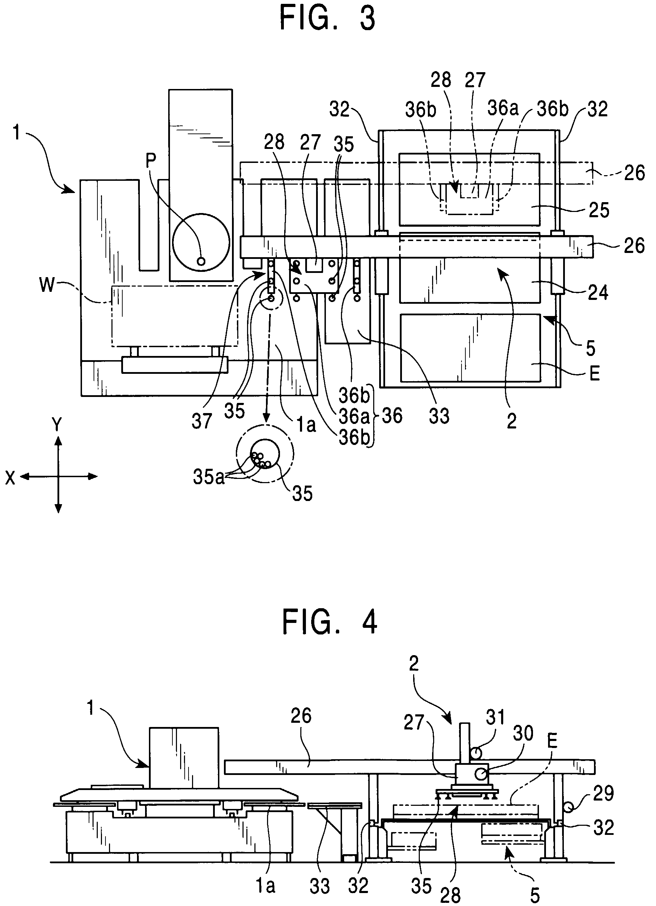

A specific example of the processing system comprising the processing machine 1 and the loader 2 will be explained in conjunction with Figures 3 and 4.

With this processing system, the loader 2 picks up product works M punched or cut by the processing machine 1 and arranges them at predetermined positions in an accumulation area E of a work storage device 5 for accumulation.

On a table la, the processing machine 1 cuts the product work M out from the sheet-like work W, constituting a material, or punches the work W into the product work M, and the processing machine 1 comprises a turret type punch press machine in this example. P is a processing position (a punch position).

The work storage device 5 comprises the accumulation area E for the product M, a material loading area 24 and a remaining material accumulating area 25 arranged in line. The areas E, 24 and 25 are each composed of a top surface of a palette that can move in a direction in which these areas E, 24 and 25 are arranged, the palette being stopped at a predetermined position. The direction (Y axis direction) in which the areas E, 24 and 25 are arranged is orthogonal with a direction (X axis direction) in which the processing machine 1 and the work storage device 5 are arranged. An auxiliary table 33 is installed between the processing machine 1 and the work storage device 5.

The loader 2 is means for picking up the products M processed by the processing machine 1 and conveying them to the accumulation area E, where they are arranged, and also acts as means for loading the work W, which is a material, from the material loading area 24 of the work storage device 5 into the processing machine 1 and means for transferring a skeleton-shaped remaining material, which is the material resulting from cutting of the product work M by the processing machine 1, to the remaining material accumulating area 25.

The loader 2 is composed of a rail-shaped movable table 26 formed like an extended rail extending in the arrangement direction (X axis direction) of the processing machine 1 and work storage device 5 and which can move in the orthogonal direction (Y axis direction), a running body 27 installed on the rail-shaped movable table 26 so as to run in its longitudinal direction (X axis direction), and a work gripping means 28 installed on the running body 27 so as to be elevated and lowered. The work gripping means 28 can thus be moved in the three axis directions that are mutually orthogonal. Movement of the rail-shaped movable table 26, running of the running body 27, and elevation of the work gripping means 28 are driven by servo motors 29, 30, 31 (Figure 4) for each of the axes. The rail-shaped movable table 26 is installed on rails 32 provided along opposite sides of the work storage device 5, is movable over the work storage device 5, and extends to above the processing machine 1 in a cantilever manner.

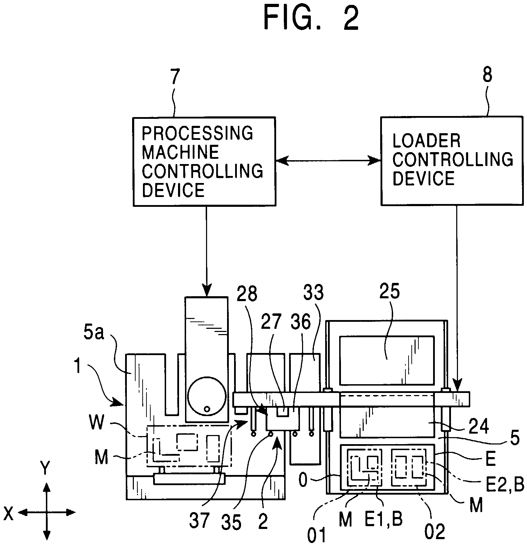

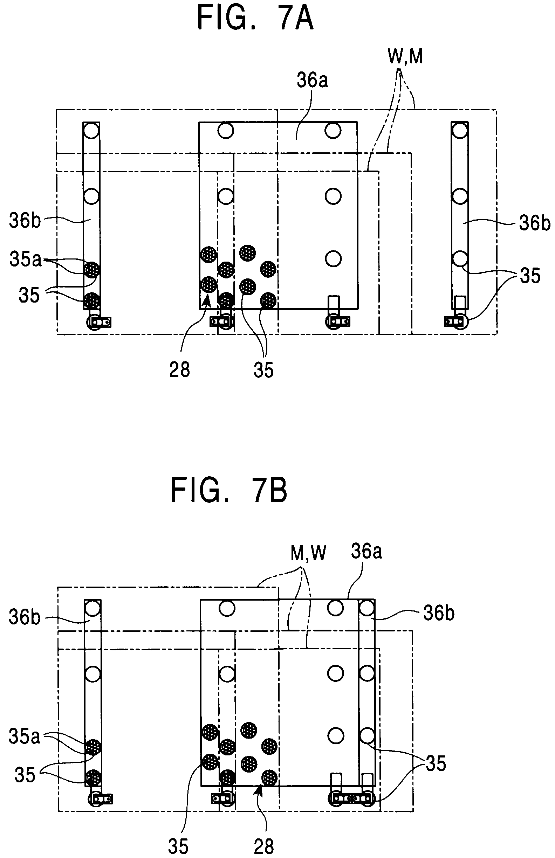

The work gripping means 28 comprises a gripping means frame 36 with a plurality of suction pads 35 attached thereto and has a gripper (not shown in the drawings) as required which grips remaining materials. The gripping means frame 36 has a central main frame 36a and a pair of movable frames 36b provided at opposite sides of the main frame 36a and which move toward and away from the main frame 36a to vary an arrangement range of the plurality of suction pads 35 in a running direction of the running body 27. The movable frame 36b and a drive means (not shown in the drawings) such as a cylinder device which moves the movable frame 36b constitute a pad range varying means 37. The work gripping means 28 is fully enlarged as shown by the solid line in Figure 2 and is fully narrowed as shown by the chain line in Figure 2. The work gripping means 28 has its width varied to appropriately suck the material work W and product work M of various sizes depending on their size and shape, as shown by the example in Figures 7A and 7B.

Each suction pad 35 sucks the work M, W in a vacuum and is connected to negative pressure generating means such as a vacuum pump (not shown in the drawings) through piping. One or more of the plurality of the suction pads 35 are composed of a group of pads including a large number of small suction pads 35a as shown in Figure 3 in a partly enlarged view. The small suction pads 35a are each connected to the negative pressure generating means via throttle means.

Consequently, even if this suction pad 35 comprising the group of pads is located partly offset from the product work M, a suction failure caused by leakage of a negative pressure is prevented and the product work M can be sucked using only the small suction pads 35a corresponding to the product work M.

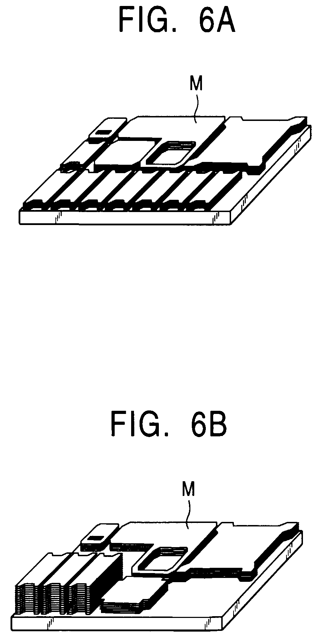

Figure 6 shows various examples of arrangements used when the loader 2 accumulates the works in the work storage device 5. Figure 6A shows an example of a loading as blanked where material works are arranged just as blanked.

Figure 6B shows an example of a loading by product where works are arranged by the type of the product M or in groups.

Next, the program creating device 4 will be described in connection with Figure 1.

The program creating device 4 is composed of a computer device, its peripheral equipment, a program and data, and has a display means 16 such as a CRT and an input means 17 such as a keyboard and a mouse.

The program creating means 6 has a product shape data creating section 18 for creating product shape data 15 from the existing processing program 13A, a conveyance program generating section 19 for generating a conveyance program 14 from the created product shape data 15 and a processing program modifying section 20 for modifying the existing processing program 13A in accordance with a predetermined conversion rule that takes operations of the loader 2 into consideration. The processing programs 13, 13A and the conveyance program 14 are described, for example, in an NC code.

The product shape data creating section 18 uses tool information stored in a tool information file 21 to convert the processing program 13A into the product shape data 15. The product shape data creating section 18 carries out what is called CAD-CAD conversions. The tool information file 21 has the tool number, type, shape, and dimensions of each tool, and other information registered therein, and if the processing machine 1 is a punch press, the tool information file 21 has the types and shapes of a punch and die tools and other information registered therein.

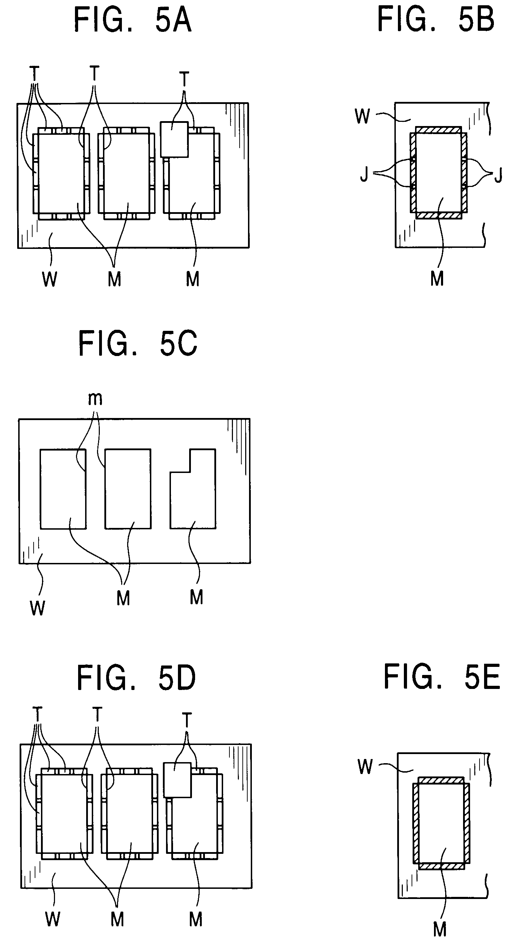

The processing program 13A sequentially describes commands in the NC code and includes, for a punching program, a feeding command for feeding the work W in the X or Y axis direction to the punch position (this command includes feeding amounts), a command for indexing the tool, a punch command, etc.. The tool indexing command is conducted by a command for a turret station or the like, and a tool is identified using a separately prepared comparison table (not shown in the drawings) indicating turret stations and tool numbers of mounted tools. Thus, for cutting, the processing program 13A is principally composed of a collection of a command for moving the work W so that a tool T located around the product work M has its components sequentially positioned relative to the work W as described in the tool arrangement diagram G1 illustrated in Figure 1 and Figure 5A, the tool indexing command, and a punch command for allowing the tool T to punch the work.

The product shape data creating section 18 uses tool information to convert this processing program 13A into the product shape data 15 for displaying a processed figure such as that shown by the product shape diagram G2 in Figure 1 and Figure 5C. That is, the product shape data 15 are composed of data indicating contours m of each product work M and figures of punch holes (not shown in the drawings) in each product work M formed by means of internal processing. Additionally, the product shape data 15 are composed of a collection of data on line segments constituting the figure.

The product shape data creating section 18 may store the converted product shape data 15 in predetermined storage means of the program creating device 4 or in the original processing program 13A as attribute data.

The conveyance program generating section 19 is means for creating the conveyance program 14 of the loader 2 from the thus created product shape data 15. The conveyance program 14 is composed of a group of sequence commands for a position where the loader 2 is to be stopped on the processing machine 1 in order to pick up the product, a position where the conveyed product work W is released in the accumulation area, suction pad positions, and other positions. The suction pad positions are indicated by a command for enlarging or narrowing the gripping means frame 36 as shown in Figures 7A and 7B, a command for selectively allowing the suction pads 35 to suck the work, and other commands. The stop position of the loader 2 and the enlargement and narrowing of the gripping means frame 36 specifically determine the position of each suction pad 35 relative to the product work M. The conveyance program generating section 19 thus generates the commands for the stop position of the loader 2 and for the enlargement and narrowing of the gripping means frame 36 depending on the shape and position of the product work M. If the product work M has internal punch holes, the program is preferably created so that the suction pads 35 are located so as not to contact with the punch holes. In addition, the conveyance program generating section 19 uses the original processing program 13A and the modified processing program 13 to automatically determine operational timings between the processing machine 1 and the loader 2 or to perform other operations.

The processing program modifying section 20 modifies the original processing program 13A in accordance with the predetermined conversion rule that takes the operations of the loader 2 into consideration to obtain the modified processing program 13.

If, for example, the original processing program 13A processes the product work M in such a manner that microjoints remain, the processing program modifying section 20 modifies this program to the processing program 13 without microjoints.

The microjoints will be explained.

In a product cutting operation without the use of the loader 2, the entire material work W is processed into the product work W while leaving microjoints J, which are thin continuous portions, between the product work M and a skeleton-shaped remaining part of the material work W, as shown by the hatching in Figure 5B. By leaving the microjoints J in this manner, the material work W can be moved on the processing machine 1 with ends of the material work W gripped by a work holder until the entire product work M has been cut out. The completed product work M is removed from the machine with the remaining microjoints J joining the product work M and the remaining material together, and the microjoints J are then cut.

However, in the processing machine 1 including the loader 2 as in this example, the operation of removing the product work M can be efficiently performed each time the single work is completed. The microjoints J are thus unnecessary.

The processing program modifying section 20 thus modifies the processing program 13A that leaves the microjoints J as shown in Figure 5B to the processing program 13 that leaves no microjoints J as shown in Figure 5E. In Figure 5E, the shaded portion shows a blanked portion obtained by means of punching. In addition, if no microjoints J are left, a procedure for processing each product work M may be efficiently altered, and it is thus altered in accordance with the predetermined conversion rule.

With the program creating device 4 configured as described above, when the loader 2 is added to the existing processing machine 1, the conveyance program 14 for the loader 2 can be efficiently and appropriately created and stored know-how of a processing machine user can be effectively used. The conveyance program 13 for carrying out conveyance suitable for the product shape can also be efficiently created. Furthermore, the processing program 13 and the conveyance program 14 can be created which can carry out appropriate processing and conveyance, respectively, adding the stored know-how as well as including the conditions of the loader 2.

In the above described embodiment, the processing machine 1 is a punch press, but the present invention is generally applicable to a case where the processing machine 1 is a work processing machine using, for example, a laser. The present invention is also applicable to a case where the processing machine 1 is a lathe, a turning center, or another machining apparatus. For processing with a lathe, if the loader is to be used to appropriately grip a processed product during unloading, loader operations must correspond to the product shape. In such a case, the method according to the present invention can be effectively used which automatically generates a loader program from the existing processing program.

The program creating device according to the present invention is a program creating device applied to a processing system comprising a processing machine operating in accordance with a processing program and a loader for conveying a work to the processing machine in accordance with a conveyance program , the device having program creating means for creating a conveyance program based on a processing program. Thus, when, for example, the loader is added to the existing processing machine, the conveyance program for the loader can be efficiently and appropriately created and know-how of a processing machine user stored in the processing program can be effectively used.

If the program creating means has a product shape data creating section for creating product shape data from the processing program and a conveyance program generating section for generating a conveyance program from the created product shape data, then a conveyance program can be efficiently created which can carry out conveyance suitable for the product.

If the program creating means has a processing program modifying section for modifying the processing program in accordance with a predetermined conversion rule that takes operations of the loader into consideration, then a processing and conveyance programs can be created which can carry out appropriate processing and conveyance, respectively, including the use of stored know-how as well as considerations for loader conditions.

## Claims

1. A program creating device applied to a processing system comprising a processing machine operating in accordance with a processing program and a loader for conveying a work to said processing machine in accordance with a conveyance program, the device being characterized by having program creating means for creating a conveyance program based on a processing program.

2. A program creating device according to Claim 1, characterized in that said program creating means has a product shape data creating section for creating product shape data from said processing program and a conveyance program generating section for generating a conveyance program from the created product shape data.

3. A program creating device according to Claim 1 or Claim 2, characterized in that said program creating means has a processing program modifying section for modifying said processing program in accordance with a predetermined conversion rule that takes operations of the loader into consideration.
